(19) Europäisches Patentamt
European Patent Office
Office européen des brevets

(11) Veröffentlichungsnummer : **0 130 459**
**B1**

(12) # EUROPÄISCHE PATENTSCHRIFT

(45) Veröffentlichungstag der Patentschrift : **10.09.86**

(51) Int. Cl.[4] : **C 07 C 69/602**, C 07 C 67/08, C 08 F 22/20, C 08 F 2/48, C 09 J 3/14

(21) Anmeldenummer : **84106997.4**

(22) Anmeldetag : **19.06.84**

(54) **Polyisobutylenbernsteinsäurehalbester, ihre Herstellung und durch Bestrahlung in ein Klebemittel überführbare Zubereitungen, welche diese Verbindungen enthalten.**

(30) Priorität : **02.07.83 DE 3323913**

(43) Veröffentlichungstag der Anmeldung : **09.01.85 Patentblatt 85/02**

(45) Bekanntmachung des Hinweises auf die Patenterteilung : **10.09.86 Patentblatt 86/37**

(84) Benannte Vertragsstaaten : **BE FR GB NL**

(56) Entgegenhaltungen :
**EP-A- 0 008 146**
**EP-A- 0 021 838**
**DE-A- 2 151 648**
**DE-A- 2 744 178**
**FR-A- 2 369 240**

(73) Patentinhaber : **Th. Goldschmidt AG**
**Goldschmidtstrasse 100 Postfach 101461**
**D-4300 Essen 1 (DE)**

(72) Erfinder : **Weitemeyer, Christian, Dr.**
**Schellstrasse 50**
**D-4300 Essen (DE)**

EP 0 130 459 B1

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft neue Polyisobutylenbernsteinsäurehalbester von Alkoholgruppen aufweisenden Acryl- oder Methacrylsäureestern sowie Verfahren zur Herstellung dieser Verbindungen durch eine an sich bekannte Veresterungsreaktion. Die Erfindung betrifft ferner Zubereitungen, die durch Bestrahlung in ein Klebmittel überführt werden können.

Es ist bekannt, Polyisobutylenbernsteinsäureanhydrid durch Umsetzung von Polyisobutylen mit Maleinsäureanhydrid herzustellen. Diese Säureanhydride wurden als Ausgangsverbindungen zur Herstellung von ungesättigten Polyestern durch Cokondensation mit Glykolen und Maleinsäureanhydrid, von Alkydharzen und von flexiblen Polyolen für die Polyurethanherstellung genutzt.

Der Erfindung liegt die Aufgabe zugrunde, Verbindungen aufzufinden, welche durch Bestrahlung die Eigenschaften eines Klebers, insbesondere eines Haftklebers, erhalten. Die Verwendbarkeit solcher Verbindungen als Klebmittel setzt dabei voraus, daß die durch Strahlung induzierte Polymerisation nicht zu einer Versprödung der Produkte führt, sondern diese noch ausreichende Flexibilität und Klebrigkeit aufweisen.

Überraschenderweise wurde gefunden, daß bestimmte Halbester des Polyisobutylenbernsteinsäureanhydrids es gestatten, Zubereitungen herzustellen, die durch Bestrahlung in Klebmittel, insbesondere solche mit Haftklebeigenschaften, überführt werden können und die sich durch hohe Klebkraft, ausgezeichnete Haftklebereigenschaften und Strahlungshärtung unter schonenden Bedingungen auszeichnen.

Die neuen Verbindungen entsprechen dabei der Formel

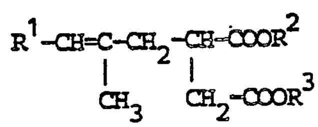

worin

$R^1$ ein Polyisobutylenrest mit einem Molekulargewicht von 100 bis 20 000 ist,

$R^2$ und

$R^3$ voneinander verschieden sind und einer der beiden Reste einen Wasserstoffrest und der andere Rest eine der Gruppen

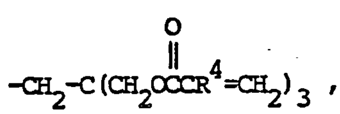 , 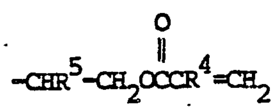 ,

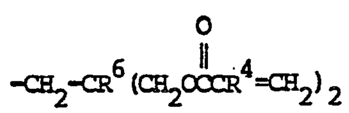 oder 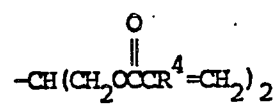

wobei

$R^4$, $R^5$ ein Wasserstoff- oder Methylrest und

$R^6$ ein Methyl- oder Ethylrest ist,

bedeutet.

Die neuen Polyisobutylenbernsteinsäurehalbester weisen somit noch eine freie Carboxylgruppe auf. Durch Umsetzung dieser Carboxylgruppe mit Verbindungen, welche geeignete funktionelle Gruppen aufweisen, können die Eigenschaften der erfindungsgemäßen Verbindungen noch weiter beeinflußt werden.

Die erfindungsgemäßen Verbindungen sind je nach Molekulargewicht mittel- bis hochviskose Flüssigkeiten. Sie polymerisieren bei Einwirkung energiereicher Strahlung, insbesondere durch Elektronenstrahlen oder UV-Licht, zu klebrigen Massen.

Die erfindungsgemäßen Verbindungen können nach einem weiteren Gegenstand der Erfindung in an sich bekannter Weise dadurch hergestellt werden, daß man Polyisobutylenbernsteinsäureanhydrid mit äquimolaren Mengen des Alkohols $R^2OH$ oder $R^3OH$ unter an sich bekannten Veresterungsbedingungen und vorzugsweise in Gegenwart eines Lösungsmittels umsetzt.

Unter an sich bekannten Veresterungsbedingungen sind dabei die dem Fachmann bekannten Bedingungen zu verstehen, unter denen üblicherweise Veresterungen durchgeführt werden. Hierzu gehört die Anwendung erhöhter Temperatur, vorzugsweise einer Temperatur von 40 bis 100 °C. Man kann die Veresterungsreaktion vorteilhaft unter Verwendung eines Lösungsmittels durchführen. Die Veresterungsreaktion kann in Gegenwart an sich bekannter Katalysatoren, wie z. B. geringer Mengen

tertiärer Amine, durchgeführt werden. Um eine unerwünschte Polymerisation der Acrylat- bzw. Methacrylatgruppen zu vermeiden, kann man geringe Mengen, z. B. 0,02 bis 1 Gew.-%, Polymerisationsinhibitoren, wie Hydrochinon, zufügen.

Ein weiterer Gegenstand der Erfindung sind Zubereitungen, die durch Bestrahlung Klebmittel bilden, bestehend aus 30 bis 100 Gew.-% Verbindungen des Patentanspruchs 1,0 bis 70 Gew.-% durch Strahlung polymerisierbare Monomere und/oder Oligomere, 0 bis 15 Gew.-% Initiatoren und 0 bis 50 Gew.-% üblicher Zusatzmittel, wie Klebhilfsmittel, Pigmente und Füllstoffe.

Die erfindungsgemäßen Zubereitungen enthalten mindestens 30 Gew.-% der Verbindungen des Patentanspruchs 1. Sie können bis zu 70 Gew.-% durch Strahlung polymerisierbare Monomere und/oder Oligomere enthalten. Beispiele solcher Monomeren oder Oligomeren sind Hexandioldiacrylat, 2-Ethylhexylacrylat, Trimethylolpropantriacrylat oder sogenannte Epoxyacrylate, die beispielsweise von Bisphenol A abgeleitet sind, Urethanacrylate und Polyesteracrylate, Eigenschaften der Klebmittel, insbesondere die Viskosität und/oder die Härtungsgeschwindigkeit und/oder die Klebeigenschaften, zu beeinflussen.

Die erfindungsgemäßen Zubereitungen können bis zu 15 Gew.-% Initiatoren enthalten. Bei der Polymerisation der in den erfindungsgemäßen Zubereitungen enthaltenen Verbindungen des Anspruchs 1 durch Elektronenstrahlen kann man auf den Zusatz von Initiatoren verzichten. Sie werden jedoch bei der Aushärtung durch UV-Strahlen benötigt. Geeignete Initiatoren sind aromatische Ketone, Hydroxyketone, Benzoinether und andere hierfür bekannte Verbindungen, die gegebenenfalls auch aktivierende Zusätze, wie Amine, enthalten können.

Die erfindungsgemäßen Zubereitungen können bis zu 50 Gew.-% übliche Zusatzstoffe enthalten. Übliche Zusatzstoffe sind z. B. Mittel, welche zur Beeinflussung der Klebeigenschaften zugemischt werden und als Klebhilfsmittel bezeichnet werden. So ist es beispielsweise möglich, Polyisobutylen, welches frei von funktionellen Gruppen ist, zuzumischen. Es ist ferner möglich, Pigmente und/oder Füllstoffe zuzusetzen soweit sie nicht die Haftklebereigenschaften beeinträchtigen. Die Verwendung von Lösungsmitteln ist möglich, aber wird im allgemeinen vermieden, da es gerade ein Vorteil der erfindungsgemäßen Verbindungen ist, daß sie aufgrund ihrer Konsistenz lösungsmittelfrei verarbeitet werden können.

Typische Beispiele für erfindungsgemäße Klebhilfsmittel sind klebrig machende Produkte, wie z. B. Polybutylene, Polybutadiene, Polyisoprene, Polychloroprene, Polyacrylate, Polyvinylacetate verschiedener Molekulargewichte, Naturkautschuk, Naturharzester, sogenannte Kohlenwasserstoffharze. Weitere geeignete Produkte sind dem Fachmann z. B. aus der DE-OS 2 340 040 bekannt.

Geeignete Füllstoffe sind Calciumcarbonat, Kieselsäure, Ruß, Talkum und Silicate.

## Beispiel 1

52,8 g (0,05 m) eines Polyisobutylenbernsteinsäureanhydrids vom Molekulargewicht 1056 und 14,9 g Pentaerythrittriacrylat wurden als 50 %ige Lösung in Toluol 60 h bei Raumtemperatur gerührt. Nach Entfernen des Lösungsmittels wurde sodann eine braune Flüssigkeit mit einer Viskosität von 45 000 mPa · s erhalten.

Säurewert : $0{,}70 \cdot 10^{-3}$ mg KOH/g Substanz (theoretisch $0{,}71 \cdot 10^{-3}$).

Typische IR-Banden :

| | | |
|---|---|---|
| 1366 $cm^{-1}$ | m | Polyisobutylen-Teil des Moleküls |
| 1390 $cm^{-1}$ | m | |
| 810 $cm^{-1}$ | m | Acrylat-Teil des Moleküls |
| 1410 $cm^{-1}$ | s | |
| 1735 $cm^{-1}$ | s | |

m = mittel
s = stark

## Beispiel 2

52,8 g des Polyisobutylenbernsteinsäureanhydrids aus Beispiel 1 wurden mit 5,8 g 2-Hydroxyethylacrylat als 50 %ige Lösung in Toluol 3 h bei 60 °C gerührt und dann im Vakuum vom Lösungsmittel befreit. Man erhält eine braune Flüssigkeit mit einer Viskosität von 23 000 mPa · s.

Säurewert : $0{,}80 \cdot 10^{-3}$ mg KOH/g Substanz (theoretisch $0{,}82 \cdot 10^{-3}$).

Typische IR-Banden :

| | | |
|---|---|---|
| 1366 $cm^{-1}$ | m | Polyisobutylen-Teil des Moleküls |
| 1390 $cm^{-1}$ | m | |
| 810 $cm^{-1}$ | w | Acrylat-Teil des Moleküls |
| 1410 $cm^{-1}$ | w | |
| 1735 $cm^{-1}$ | s | |

m = mittel
s = stark
w = schwach

## Beispiel 3

146 g (0,05 m) eines Polyisobutylenbernsteinsäureanhydrids vom Molekulargewicht 2920 und 6,5 g 2-Hydroxypropylacrylat wurden als 50 %ige Lösung in Toluol 5 h bei 85 °C gerührt. Nach Entfernen des Lösungsmittels wurde eine braune Flüssigkeit mit einer Viskosität von 39 000 mPa · s erhalten.

Säurewert : $0{,}31 \cdot 10^{-3}$ mg KOH/g Substanz (theoretisch $0{,}33 \cdot 10^{-3}$).

Typische IR-Banden wie in Beispiel 2.

Aushärtung und Eignungsprüfung

Die Produkte der Beispiele 1 bis 3 sowie die in der folgenden Tabelle aufgeführten Zubereitungen aus diesen Produkten wurden mit 8 % Diethoxyacetophenon vermischt und durch Belichtung mit einer UV-Mitteldruck-Hg-Lampe (80 W/cm) während 1 bis 3 Sek. in einer Schichtdicke von 20 µm auf einem 90 g/m² Papier gehärtet.

| Zubereitung | 1 | 2 | 3 | 4 | 5 | 6 | 7 | 8 | 9 |
|---|---|---|---|---|---|---|---|---|---|
| Produkt Beispiel 1 | 100 | | | 90 | 40 | 20 | | 60 | 40 |
| Produkt Beispiel 2 | | 100 | | | 40 | | | | 40 |
| Produkt Beispiel 3 | | | 100 | | | 20 | 60 | | 10 |
| Polyisobutylen, MG 3000 | | | | 10 | | 20 | 5 | 15 | |
| Hexandioldiacrylat | | | | | 20 | | 20 | | |
| oligomeres Polyester-acrylat, MG 500 | | | | | | 40 | 15 | | |
| oligomeres Epoxy-acrylat, MG 700 | | | | | | | | 25 | |
| Polybutadien, MG 6000 | | | | | | | | | 10 |

Von den beschichteten und UV-bestrahlten Papieren wurden 3 cm breite Streifen durch fünfmaliges Walzen mit einer 9 kg schweren Walze auf Polybutylenterephthalat sowie auf chromsäurevorbehandeltes Aluminium aufgebracht. Bei dem Versuch, die Papierstreifen, die mit den zu klebrigen Produkten ausgehärteten Zubereitungen 1 bis 9 beschichtet worden waren, von den Substraten Polyester und Aluminium zu lösen, wurde in allen Fällen das Papier zerstört.

Ohne UV-Härtung dringen dagegen die Zubereitungen 1 bis 9 in beschichtete Papiere ein. Diese Papiere lassen sich dann leicht von Polyester und Aluminium lösen, ohne zerstört zu werden.

Damit ist gezeigt, daß die erfindungsgemäß hergestellten Produkte und Zubereitungen aus dem flüssigen Zustand durch strahleninduzierte Polymerisation in feste Form überführt werden können. In dieser Form sind sie für die Anwendung als Haftkleber geeignet.

**Patentansprüche**

1. Polyisobutylenbernsteinsäurehalbester der Formel

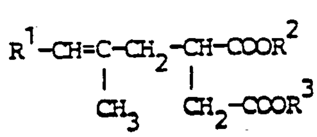

worin

$R^1$ ein Polyisobutylenrest mit einem Molekulargewicht von 100 bis 20 000 ist,
$R^2$ und
$R^3$ voneinander verschieden sind und einer der beiden Reste einen Wasserstoffrest und der andere Rest eine der Gruppen

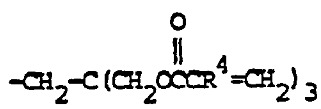 , 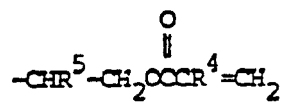 ,

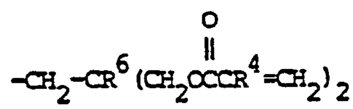 oder 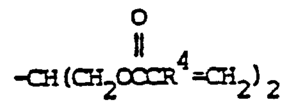

wobei
$R^4$, $R^5$ ein Wasserstoff- oder Methylrest und
$R^6$ ein Methyl- oder Ethylrest ist,
bedeutet.

2. Verfahren zur Herstellung der Verbindungen des Anspruchs 1, dadurch gekennzeichnet, daß man Polyisobutylenbernsteinsäureanhydrid mit äquimolaren Mengen des Alkohols $R^2OH$ oder $R^3OH$ unter an sich bekannten Veresterungsbedingungen und vorzugsweise in Gegenwart eines Lösungsmittels umsetzt.

3. Durch Bestrahlung in ein Klebmittel überführbare Zubereitung, bestehend aus 30 bis 100 Gew.-% Verbindungen des Patentanspruchs 1, 0 bis 70 Gew.-% durch Strahlung polymerisierbare Monomere und/oder Oligomere, 0 bis 15 Gew.-% Initiatoren und 0 bis 50 Gew.-% üblicher Zusatzmittel, wie Klebhilfsmittel, Pigmente und Füllstoffe.

**Claims**

1. Polyisobutylenesuccinic acid half-esters of the formula

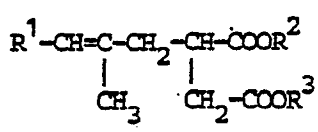

wherein
$R^1$ is a polyisobutylene radical having a molecular weight of 100 to 20 000,
$R^2$ and
$R^3$ are different from each other and one of the two radicals denotes a hydrogen radical and the other radical one of the groups

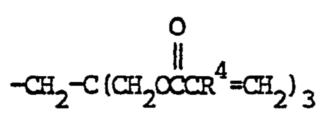 , 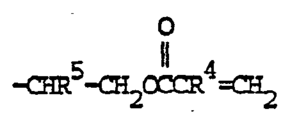 ,

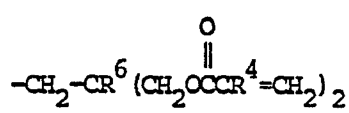 or 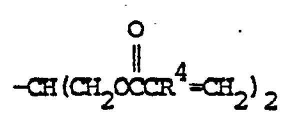

where
$R^4$, $R^5$ is a hydrogen or methyl radical and
$R^6$ is a methyl or ethyl radical.

2. Process for preparing compounds of Claim 1, characterized in that polyisobutylenesuccinic anhydride is reacted with equimolar amounts of the alcohol $R^2OH$ or $R^3OH$ under esterification conditions known *per se* and preferably in the presence of a solvent.

3. Formulation which is convertible into an adhesive by irradiation, consisting of 30 to 100 % by

weight of compounds of Claim 1, 0 to 70 % by weight of radiation-polymerizable monomers and/or oligomers, 0 to 15 % by weight of initiators and 0 to 50 % by weight of customary additives, such as adhesion auxiliaries, pigments and fillers.

**Revendications**

1. Semi-esters de l'acide polyisobutylènesuccinique de formule

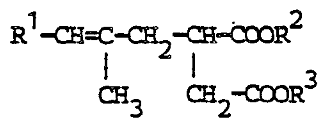

dans laquelle

$R^1$ est un résidu polyisobutylène ayant une masse moléculaire de 100 à 20 000,

$R^2$ et

$R^3$ sont différents l'un de l'autre, et l'un des deux radicaux est un radical hydrogène, et l'autre est l'un des groupes

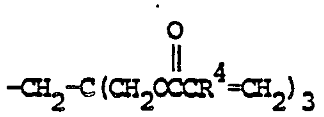 ,

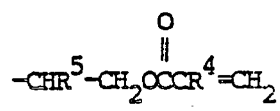 ,

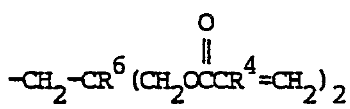 ou 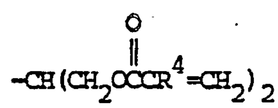

où

$R^4$, $R^5$ sont un radical hydrogène ou méthyle, et

$R^6$ est un radical méthyle ou éthyle.

2. Procédé pour la préparation des composés selon la revendication 1, caractérisé en ce qu'on fait réagir de l'anhydride de l'acide polyisobutylènesuccinique sur des quantités équimolaires de l'alcool $R^2OH$ ou $R^3OH$, dans des conditions d'estérification connues en soi, et de préférence en présence d'un solvant.

3. Préparation pouvant être transformée en un adhésif sous l'effet d'un rayonnement, constituée de 30 à 100 % en poids de composés selon la revendication 1, de 0 à 70 % en poids de monomères et/ou d'oligomères polymérisables sous l'effet d'un rayonnement, de 0 à 15 % en poids d'initiateurs et de 0 à 50 % en poids d'additifs habituels, comme des auxiliaires d'adhérence, des pigments et des charges.